# EUROPEAN PATENT SPECIFICATION

(11) **EP 3 587 874 B1**
(45) Date of publication and mention of the grant of the patent: **02.04.2025**
(21) Application number: 18758442.0
(22) Date of filing: 21.02.2018
(51) Int. Cl.: F16J 15/44, F04D 29/12, F16J 15/54

(54) **SEAL DEVICE**
DICHTUNGSVORRICHTUNG
DISPOSITIF D'ÉTANCHÉITÉ

(30) Priority: 22.02.2017 JP 2017030754
(43) Date of publication of application: 01.01.2020
(73) Proprietor: Eagle Industry Co., Ltd., Minato-ku Tokyo 105-8587 (JP)
(72) Inventor: TOKUNAGA, Yuichiro, Tokyo 105-8587 (JP); INOUE, Hideyuki, Tokyo 105-8587 (JP); KIMURA, Wataru, Tokyo 105-8587 (JP); IGUCHI, Tetsuya, Tokyo 105-8587 (JP); KASAHARA, Hidetoshi, Tokyo 105-8587 (JP); HIROMATSU, Jun, Tokyo 105-8587 (JP); KUROKI, Yasuhiro, Tokyo 105-8587 (JP); KIKUCHI, Ryu, Tokyo 105-8587 (JP)
(74) Representative: TBK
(86) International application number: PCT/JP2018/006091
(87) International publication number: WO 2018/155460

(56) References cited:
- EP-A1- 3 604 870
- CA-A1- 2 672 030
- JP-A- S52 129 866
- JP-A- S57 154 562
- SU-A1- 1 357 646
- US-A1- 2006 006 602
- US-A1- 2009 121 440

## Description

### TECHNICAL FIELD

The present invention relates to a seal device according to the preamble of claim 1 that seals between a housing and a rotation shaft passing through the housing, and in particular, relates to a seal device including a floating ring used for a rotation shaft of a fluid machine such as a pump.

### BACKGROUND ART

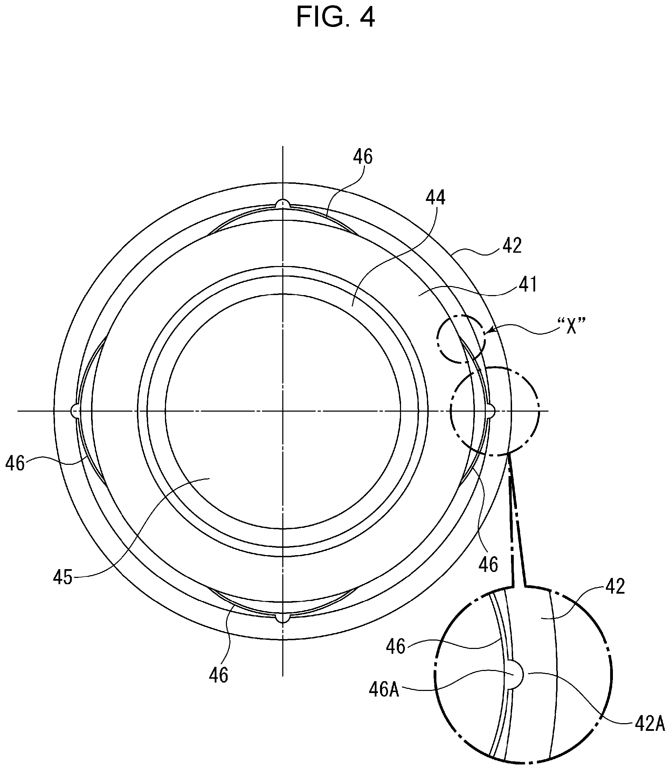

Conventionally, in a rotating fluid machine such as a pump, in order to seal a fluid, a floating seal is used, and the floating seal shown in FIG. 4 is known (hereinafter, called as "Conventional Art 1," for example, refer to Patent Citation 1). This conventional art includes a rotation shaft 45 of a fluid machine, a sleeve 44 attached to an outer periphery of the rotation shaft 45 and rotated integrally with the rotation shaft, a seal ring 41 loosely fitted to the sleeve 44 while having a clearance, plate springs 46 provided at four points of an outer periphery of the seal ring 41, and a retainer 42 that accommodates the seal ring 41, and in a state where projections 46A of the plate springs 46 are engaged with grooves 42A provided in the retainer 42, the seal ring 41 is supported by the plate springs 46. By the wedge effect (effect of dynamic pressure generated in a wedge portion) generated between an inner peripheral face of the seal ring 41 and the sleeve 44 of the rotation shaft 45 and the Lomakin effect (aligning effect by flow losses of a fluid between surfaces of a seal ring and a shaft at the time of generation of a seal pressure difference), a gap between the inner peripheral face of the seal ring 41 and the rotation shaft 45 is held to be fixed, and the seal ring 41 is pressed in the axial direction from the high pressure fluid side to the retainer 42 side, so that the seal ring 41 and the retainer 42 are tightly sealed.

### CITATION LIST

### Patent Literature

Patent Citation 1: JP S57 154562 A
Patent Citation 2: CA 2 672 030 A1
Patent Citation 3: SU 1 357 646 A1
Patent Citation 4: US 2006/006602 A1

### SUMMARY OF INVENTION

### Technical Problem

However, in Conventional Art 1, the outer periphery of the seal ring 41 and the plate springs 46 are in contact with each other while being always relatively displaced. Thus, upon running for a long time, surface roughening occurs at contact portions X between the outer periphery of the seal ring 41 and the plate springs, and the seal ring 41 and the plate springs are anchored to each other. Therefore, the seal ring 41 may sometimes be incapable of following movement of the rotation shaft 45. The projections 46A of the plate springs 46 may sometimes be worn away or deformed in the grooves 42A of the retainer 42. As a result, the plate springs 46 and the seal ring 41 cannot follow the movement of the rotation shaft 45 and an automatic aligning operation is lost. Thus, there are possibilities that the rotation shaft and the seal ring are brought into contact with each other and damaged, and that a clearance is increased more than an optimal value and a proper sealing operation cannot be obtained.

Further, in Conventional Art 1, assembling takes a lot of time and care. That is, in a case where the plate springs 46 are provided in the retainer 42 and then the seal ring 41 is inserted into the retainer 42, the plate springs 46 have to be temporarily compressed to ensure a gap for inserting the seal ring 41. Conversely, in a case where the seal ring 41 is arranged in the retainer 42 in advance and then the plate springs 46 are provided in the retainer 42, the plate springs 46 have to be compressed and arranged to ensure a gap between the retainer 42 and the seal ring 41. Thus, assembling takes a lot of time and care.

Patent Citations 2 and 3 each show a generic seal device having the features of the preamble of claim 1. A further conventional seal device is shown by Patent Citation 4.

The present invention is achieved focusing on such a problem, and an object thereof is to provide a seal device in which an automatic aligning operation of a seal ring is maintained even upon running for a long time, a clearance between a rotation shaft and the seal ring can be properly held, and a sealing operation by the seal ring and a vibration damping function can be exerted, the seal device to be easily assembled.

### Solution to Problem

The object is achieved by a seal device having the features of claim 1. A further advantageous development of the present invention is set out in the dependent claim.

According to the present invention, since the floating ring is contactlessly aligned, the floating ring is not restricted by the housing. An automatic aligning operation of the seal ring is maintained even upon running for a long time, a clearance between the rotation shaft and the seal ring is properly held, a sealing operation can be exerted, and the floating ring can be easily installed in a supporting means.

The seal device of the present invention is characterized in that the aligning means includes a first magnet arranged in the housing, the first magnet having a magnetic pole face directed in the radial direction, and a second magnet arranged in the floating ring, the second magnet having a magnetic pole face directed in the radial direction, and the magnetic pole faces of the first magnet and of the second magnet are arranged so that the same poles oppose each other.

According to the present invention, since the floating ring is pressed by magnetic repulsion force of the magnets, movement of the rotation shaft is restricted via the floating ring. Thus, vibration of the rotation shaft can be reduced.

The seal device of the present disclosure is characterized in that magnetic pole adjacent faces of the first magnet and the second magnet where the N pole and the S pole are adjacent to each other are surrounded by a non-magnetic material.

Accordingly, leakage flux of permanent magnets can be reduced. Thus, magnetic force can be efficiently utilized.

### BRIEF DESCRIPTION OF DRAWINGS

[FIG. 1] FIG. 1 is a front sectional view of a seal device according to an embodiment of the present invention.
[FIG. 2] FIG. 2 is a sectional view (side sectional view) taken along the line A-A of FIG. 1.
[FIG. 3] FIG. 3 is a side sectional view of a seal device according to a second embodiment.
[FIG. 4] FIG. 4 is a side sectional view of a conventional seal device.

### DESCRIPTION OF EMBODIMENTS

Modes for carrying out a seal device according to the present invention will be described in detail with reference to the drawings. However, the present invention is not interpreted while being limited to this. As long as not departing from the scope of the present invention, various modifications, corrections, and improvements can be added based on the knowledge of those skilled in the art.

### First embodiment

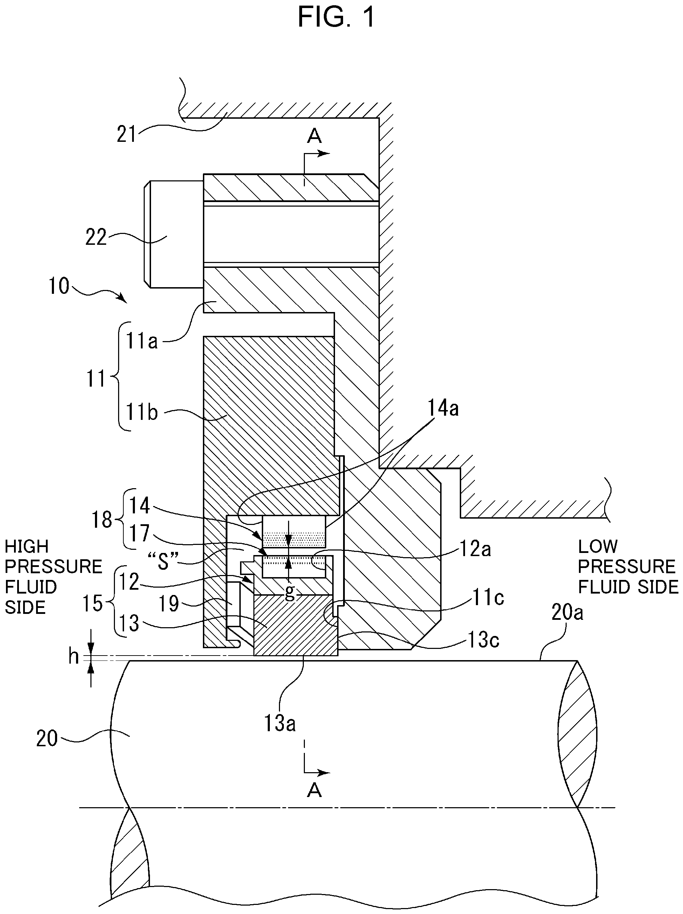

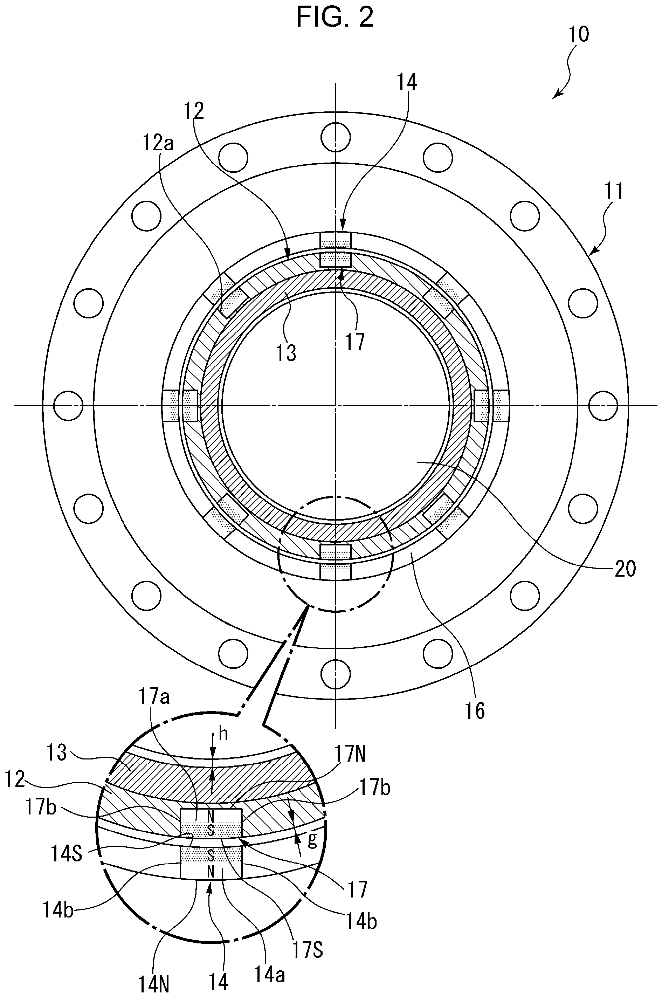

A seal device 10 according to a first embodiment of the present invention will be described with reference to FIGS. 1 and 2. A rotation shaft 20 of a fluid machine is arranged so as to pass through a casing 21, and the left side is the high pressure side and the right side is the low pressure side. The seal device 10 is mainly formed by a floating ring 15, and a housing 11 that accommodates the floating ring 15.

The housing 11 is mainly formed by a holder 11a and a flange 11b. The holder 11a is fixed to the casing 21 by a fastening means 22. Each of the holder 11a and the flange 11b has a predetermined gap from the rotation shaft 20, and has a hole through which the rotation shaft 20 passes. The floating ring 15 is accommodated in a space S surrounded by the holder 11a, the flange 11b, and the rotation shaft 20 passing through the housing 11. Plural (four in the present embodiment) permanent magnets 14 (first magnet of the present invention) are provided in an inner peripheral portion of the flange 11b while being separated from each other in the circumferential direction. Spacers 16 made of a non-magnetic material are arranged between the plural permanent magnets 14. The permanent magnets 14 and the spacers 16 hold circumferential positions of each other. Inner peripheral faces of the permanent magnets 14 and the spacers 16 are formed in cylindrical faces having the same inner diameter size, and the inner peripheral faces of the permanent magnets 14 and the spacers 16 form an inner peripheral face of the flange 11b. The floating ring 15 is biased by a bias means 19 such as a spring, and an end face 13c of a seal ring 13 and an end face 11c of the holder 11a are tightly attached to each other, so that the seal ring 13 and the holder 11a are tightly sealed. Hereinafter, a tightly sealing means by tight attachment between the end face 13c of the seal ring 13 and the end face 11c of the holder 11a will be called as a secondary seal.

The floating ring 15 is mainly formed by the seal ring 13, a retainer 12 fitted to an outer periphery of the seal ring 13, and permanent magnets 17 (second magnet of the present invention) arranged in an outer periphery of the retainer 12.

The seal ring 13 is a ring-shaped member having a substantially-rectangular section, made of a material having a favorable sliding property such as carbon. An inner peripheral face 13a of the seal ring 13 is formed in a cylindrical face having a minute radial gap h (inside gap) with respect to an outer peripheral face 20a of the rotation shaft 20.

The retainer 12 is an annular member made of a non-magnetic material such as austenite stainless and plastic. The retainer 12 adds compression force to the seal ring 13 by being tightly fitted to the outer periphery of the seal ring 13 made of carbon, etc. Thereby, even when the seal ring 13 is made of a brittle material such as carbon, breakage of the seal ring 13 due to contact with the rotation shaft 20, etc. can be prevented. Plural groove portions 12a are provided in the outer periphery of the retainer 12 while being separated from each other in the circumferential direction. The plural groove portions 12a are provided at positions opposing the permanent magnets 14, and the permanent magnets 17 (second magnet of the present invention) are fixed to the groove portions 12a. An outer peripheral face of the retainer 12 and outer peripheral faces of the permanent magnets 17 are formed in cylindrical faces having the same size, and the outer peripheral face of the retainer 12 and the outer peripheral faces of the permanent magnets 17 form an outer peripheral face of the floating ring 15. The permanent magnets 17 may be attached to the permanent magnets 14 while providing spacers in the outer periphery of the retainer 12. Similarly, the permanent magnets 14 may be attached to grooves provided in an inner periphery of the flange 11b like the permanent magnets 17.

An aligning means 18 of the present invention is formed by the retainer 12 in which the permanent magnets 17 are arranged and the housing 11 in which the permanent magnets 14 are arranged. The permanent magnets 14 and the permanent magnets 17 are made of ferrite magnets, neodymium magnets, samarium-cobalt magnets, alnico magnets, praseodymium magnets, etc., and the magnets are selected according to a temperature condition for use and required magnetic force. The permanent magnets 14 and the permanent magnets 17 are respectively magnetized so that magnetic flux flows in the radial direction. The permanent magnets 14 are attached to the inner peripheral portion of the flange 11b, and the permanent magnets 17 are respectively attached to an outer peripheral portion of the retainer 12. The plural permanent magnets are attached so that the same magnetic pole faces oppose each other in the radial direction. For example, as shown in FIG. 2, the permanent magnets are attached so that S magnetic pole faces 14S of the permanent magnets 14 are directed to the radially inside, and S magnetic pole faces 17S of the permanent magnets 17 are directed to the radially outside, and arranged so that the S magnetic pole faces 14S and the S magnetic pole faces 17S oppose each other. Alternatively, the permanent magnets may be attached so that N magnetic pole faces 14N of the permanent magnets 14 are directed to the radially inside and N magnetic pole faces 17N of the permanent magnets 17 are directed to the radially outside, and arranged so that the N magnetic pole surfaces 14N and the N magnetic pole surfaces 17N oppose each other.

The floating ring 15 loosely fitted to an outer periphery of the rotation shaft 20 passing through the housing 11 is arranged in the space S of the housing 11. Thereby, the permanent magnets 17 of the floating ring 15 and the permanent magnets 14 of the inner peripheral portion of the flange 11b are attached in a state where a predetermined gap g (outside gap) is held by magnetic repulsion force, and the floating ring is attached and accommodated in the space S of the housing 11 in a state where the inner peripheral face 13a of the floating ring 15 has the gap h (inside gap) from the outer peripheral face 20a of the rotation shaft 20. Thereby, the aligning means 18 can hold the gap g over the entire circumference between the outer peripheral face of the floating ring 15 and the inner peripheral face of the flange 11b of the housing 11 by the magnetic repulsion force of the permanent magnets 17 and the permanent magnets 14, and hold the gap h over the entire circumference between the inner peripheral face 13a of the floating ring 15 and the outer peripheral face 20a of the rotation shaft 20, and the floating ring 15 autonomously aligns a radial position without contact with the housing 11 in the radial direction. The gap h and the gap g are formed within a range of 0.5 ≤ g/h ≤ 2. Thereby, in addition to an aligning operation by the magnetic repulsion force of the aligning means 18, by an aligning effect and a damping effect by a fluid coming in and out of the gaps h and g, vibration of the rotation shaft 20 can be furthermore reduced. A circumferentially-positioning means (not shown) is provided in the floating ring 15.

In the permanent magnets 14 and the permanent magnets 17, magnetic pole adjacent faces 14a, 14b, 17a, 17b where different magnetic poles are adjacent to each other are covered by a non-magnetic material such as austenite stainless, plastic, and the air. In the magnetic pole adjacent faces 14a, 14b, 17a, 17b of the permanent magnets 14 and the permanent magnets 17, the N pole and the S pole are close to each other. Thus, leakage flux in which magnetic flux is short-circuited and flows from the N pole to the S pole is large. Therefore, by covering the magnetic pole adjacent faces 14a, 14b, 17a, 17b of the permanent magnets 14 and the permanent magnets 17 by a non-magnetic material having high magnetic resistance, the leakage flux can be reduced, and the magnetic repulsion force between the permanent magnets 14 and the permanent magnets 17 can be enhanced. Plastic and the air have a larger effect of reducing the leakage flux than austenite stainless.

Next, operations of the seal device 10 having the above configuration will be described. During stoppage of the rotating fluid machine, the aligning means 18 automatically aligns in the radial direction so that the floating ring 15 and the flange 11b of the housing 11 hold the gap g by the magnetic repulsion force of the permanent magnets 14 of the flange 11b of the housing 11 and the permanent magnets 17 of the floating ring 15, and aligns in the radial direction so that the inner peripheral face 13a of the seal ring 13 of the floating ring 15 and the outer peripheral face 20a of the rotation shaft 20 hold the gap h. In such a way, even during the stoppage where no wedge effect is generated between the floating ring 15 and the rotation shaft 20, the minute gap h is held between the inner peripheral face 13a of the floating ring 15 and the outer peripheral face 20a of the rotation shaft 20. Thus, wear of the seal ring 13 at the time of start-up of the rotating fluid machine can be prevented. The secondary seal by the tight attachment between the end face 13c of the seal ring 13 and the end face 11c of the holder 11a soundly functions even during the stoppage.

Even during running, the aligning means 18 aligns to hold the gap g by the magnetic repulsion force of the permanent magnets 14 of the flange 11b of the housing 11 and the permanent magnets 17 of the floating ring 15, and further, the floating ring 15 and the rotation shaft 20 are aligned to hold the gap h by dynamic pressure due to the wedge effect. In such a way, in the floating ring 15 held on the outer peripheral side and the inner peripheral side, the gap h from the outer peripheral face 20a of the rotation shaft 20 can be substantially uniform over the entire circumference, so that a favorable sealing state can be obtained.

During the running, in the floating ring 15, in addition to pressing force of the bias means 19, by pressure from the high pressure fluid side to the low pressure fluid side, the end face 13c of the seal ring 13 and the end face 11c of the holder 11a are further tightly attached to each other. Thus, a sealing effect of the secondary seal is further enhanced.

When the rotation shaft 20 largely runs out by the vibration during the running, core displacement occurs between the floating ring 15 and the rotation shaft 20, so that the gap g on the outer peripheral side of the floating ring 15 and the gap h on the inner peripheral side become non-uniform. However, even when the gap h is decreased by eccentricity, force to solve the core displacement between the seal ring 13 and the rotation shaft 20 acts between the inner peripheral face 13a of the floating ring 15 and the outer peripheral face 20a of the rotation shaft 20 by the dynamic pressure due to the wedge effect, and the radial position of the floating ring 15 is aligned. Further, on the outer peripheral side of the floating ring 15, the magnetic repulsion force of the aligning means 18 also acts. Thus, the radial position of the floating ring 15 is automatically aligned. In such a way, even when the rotation shaft 20 largely runs out and the floating ring 15 is vibrated, the dynamic pressure due to the wedge effect acts on the inner peripheral side of the floating ring 15, the magnetic repulsion force acts on the outer peripheral side of the floating ring 15, and vibration of the floating ring 15 is reduced, so that the vibration of the rotation shaft 20 is also reduced via the floating ring 15.

The present invention exerts the following excellent effects.

The floating ring 15 is aligned in the radial direction from the outer peripheral side so that the clearance g is contactlessly held by the magnetic repulsion force of the aligning means 18, and further held from the inner peripheral side so that the minute clearance h is held by the dynamic pressure due to the wedge effect. Thus, during the stoppage and during the running, a favorable sealing state can be obtained, so that wear of the seal ring 13 can be prevented.

The floating ring 15 arranged on the inner diameter side of the housing 11 has the gap with respect to the housing 11 and in no contact with the housing. Thus, a tool, etc. for attachment is not required, and only by inserting into the housing 11, the floating ring can be simply arranged inside the housing.

The floating ring 15 is held by the magnetic repulsion force of the aligning means 18 on the outer peripheral side, and held by the dynamic pressure due to the wedge effect on the inner peripheral side. That is, by the floating ring 15 whose movement is held from the outer peripheral side and the inner peripheral side, the vibration of the rotation shaft 20 is regulated, so that the vibration can be reduced.

By the magnetic repulsion force of the aligning means 18, the floating ring 15 is automatically aligned in no contact with the housing 11. Thus, without being anchored to the floating ring 15 and the housing 11, the aligning means 18 can exert the function for a long time.

The magnetic pole adjacent faces 14a, 14b of the permanent magnets 14 where different magnetic poles are adjacent to each other and the axial magnetic pole adjacent faces 17a, 17b of the permanent magnets 17 are covered by a non-magnetic material. Thus, the leakage flux is reduced, so that the repulsion force between the permanent magnets 14 and the permanent magnets 17 can be efficiently enhanced.

The seal ring 13 is made of a material excellent in a self-lubricating property and a sliding property such as carbon. Thus, even when the seal ring is always relatively displaced with respect to the end face 11c of the holder 11a during the running, wear, surface roughening, etc. can be prevented, so that the function of the secondary seal can be maintained over a long time.

### Second embodiment

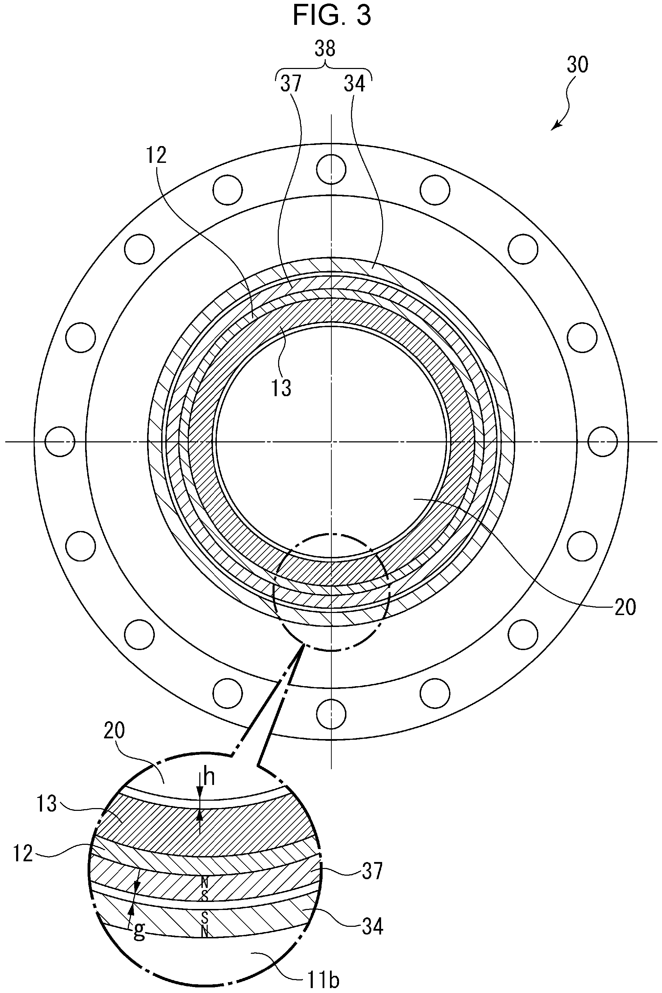

Next, a seal device according to a second embodiment will be described with reference to FIG. 3. The same and overlapping configurations as the above embodiment will not be described. A seal device 30 according to the second embodiment is chiefly different from the seal device 10 of the first embodiment in a point that permanent magnets 34, 37 of an aligning means are formed in an annular shape but the other basic configurations are the same as the first embodiment. Thus, the same members will be given the same reference signs and overlapping descriptions will be omitted.

As shown in FIG. 3, an aligning means 38 is formed by the ring-shaped permanent magnet 37 attached to an outer peripheral portion of a retainer 12, and the ring-shaped permanent magnet 34 arranged in an inner peripheral portion of a flange 11b of a housing 11. The permanent magnet 34 and the permanent magnet 37 are made by forming a ferrite magnet or a rare-earth magnet into an annular shape, or made of a plastic magnet formed by mixing powder of a ferrite magnet or a rare-earth magnet with rubber or plastic. Since resin is mixed in, the plastic magnet can be formed into a complicated shape and a thin shape, so that high size precision can be obtained without finish processing. The permanent magnet 34 and the permanent magnet 37 formed in a ring shape are respectively magnetized so that magnetic flux flows in the radial direction. The permanent magnet 34 arranged in the inner peripheral portion of the flange 11b and the permanent magnet 37 arranged in the outer peripheral portion of the retainer 12 are attached so that the same poles oppose each other across a gap g. Thereby, the permanent magnet 34 and the permanent magnet 37 can obtain uniform magnetic repulsion force over the entire circumference. Thus, an outer peripheral face of the ring-shaped permanent magnet 37 attached to the outer peripheral portion of the retainer 12 and an inner peripheral face of the ring-shaped permanent magnet 34 attached to the inner peripheral portion of the flange 11b of the housing 11 have the gap g over the entire circumference, and the permanent magnets are attached in a state of having a gap h over the entire circumference between an inner peripheral face 13a of a seal ring 13 and a rotation shaft 20. The permanent magnet 34 and the permanent magnet 37 may be integrally formed in a ring shape, or members formed by dividing in the circumferential direction may be attached to the inner peripheral portion of the flange 11b of the housing 11 and the outer peripheral portion of the retainer 12 so as to be formed in a ring shape.

The embodiments of the present invention are described above with the drawings. However, specific configurations are not limited to these embodiments but the present invention includes modifications and additions within a range not departing from the scope of the appended claims.

For example, in the above embodiments, the floating ring 15 is an annular integrated body. However, the present invention is not limited to this but members formed by dividing in the circumferential direction may be assembled into an annular integrated body.

In the above embodiments, the floating ring 15 is biased by the bias means 19. However, without using the bias means 19, the end face 13c of the seal ring 13 and the end face 11c of the holder 11a may be further tightly attached to each other by the pressure from the high pressure fluid side to the low pressure fluid side, so as to form the secondary seal.

In the above embodiment, the aligning means 18 is formed by the permanent magnets 17 attached to the outer peripheral portion of the retainer 12 and the permanent magnets 14 attached to the inner peripheral portion of the flange 11b of the housing 11. However, the present invention is not limited to this. For example, permanent magnets may be attached to the outer peripheral portion of the retainer 12 and electromagnets may be attached to the inner peripheral portion of the flange 11b of the housing 11.

In a case where a working fluid of a pump is a super-low-temperature fluid such as liquid helium, superconducting magnets may be used in place of the permanent magnets. The superconducting magnets have the flux pinning effect. Thus, an effect that a detent for the floating ring is not required can also be obtained.

The present invention is mainly used for the purpose of the seal device but may be used as a damping device that damps vibration of a shaft.

### REFERENCE SIGNS LIST

- 10: Seal device
- 11: Housing
- 11a: Holder
- 11b: Flange
- 12: Retainer
- 13: Seal ring
- 14: Permanent magnet (first magnet)
- 15: Floating ring
- 17: Permanent magnet (second magnet)
- 18: Aligning means
- 19: Bias means
- 20: Rotation shaft
- 21: Casing
- 22: Fastening means
- 30: Seal device
- 34: Permanent magnet (first magnet)
- 37: Permanent magnet (second magnet)
- 38: Aligning means
- S: Space
- g: Gap (outside gap)
- h: Gap (inside gap)

## Claims

1. A seal device (10) that seals between a housing (11) and a rotation shaft (20) passing through the housing (11), the seal device (10) comprising:
a floating ring (15) arranged with an inside gap (h) with respect to the rotation shaft (20), and with an outside gap (g) with respect to the housing (11), and
an aligning means (18) that contactlessly aligns a position of the floating ring (15), **characterized in that**
the aligning means (18) includes a first magnet (14) arranged in the housing (11), the first magnet (14) having a magnetic pole face (14N, 14S) directed in the radial direction, and a second magnet (17) arranged in the floating ring (15), the second magnet (17) having a magnetic pole face (17N, 17S) directed in the radial direction,
wherein
the magnetic pole faces (14N, 14S, 17N, 17S) of the first magnet (14) and of the second magnet (17) are arranged so that the same poles oppose each other, and
the inside gap (h) and the outside gap (g) are formed within a range of 0.5 ≤ g/h ≤ 2.

2. The seal device (10) according to claim 1, wherein
the floating ring (15) is mainly formed by a seal ring (13), a retainer (12) made of a non-magnetic material and the second magnet (17), the retainer (12) is fitted to an outer periphery of the seal ring (13), and the second magnet (17) is arranged in an outer periphery of the retainer (12).

## Patentansprüche

1. Dichtungsvorrichtung (10), die zwischen einem Gehäuse (11) und einer Drehwelle (20) abdichtet, die durch das Gehäuse (11) hindurchgeht, wobei die Dichtungsvorrichtung (10) Folgendes aufweist:
einen Schwimmring (15), der mit einem inneren Spalt (h) in Bezug auf die Drehwelle (20) und mit einem äußeren Spalt (g) in Bezug auf das Gehäuse (11) angeordnet ist, und
ein Ausrichtungsmittel (18), das eine Position des Schwimmrings (15) berührungslos ausrichtet, **dadurch gekennzeichnet, dass**
das Ausrichtungsmittel (18) einen ersten Magneten (14), der in dem Gehäuse (11) angeordnet ist, wobei der erste Magnet (14) eine Magnetpolfläche (14N, 14S) hat, die in die radiale Richtung gerichtet ist, und einen zweiten Magneten (17) aufweist, der in dem Schwimmring (15) angeordnet ist, wobei der zweite Magnet (17) eine Magnetpolfläche (17N, 17S) hat, die in die radiale Richtung gerichtet ist,
wobei
die Magnetpolflächen (14N, 14S, 17N, 17S) des ersten Magneten (14) und des zweiten Magneten (17) so angeordnet sind, dass gleiche Pole einander gegenüberliegen, und
der innere Spalt (h) und der äußere Spalt (g) innerhalb eines Bereichs von 0,5 ≤ g/h ≤ 2 ausgebildet sind.

2. Dichtungsvorrichtung (10) nach Anspruch 1, wobei
der Schwimmring (15) hauptsächlich durch einen Dichtungsring (13), einen Halter (12), der aus einem nichtmagnetischen Material gemacht ist, und dem zweiten Magneten (17) ausgebildet ist, der Halter (12) an einem Außenumfang des Dichtungsrings (13) aufgepresst ist und der zweite Magnet (17) in einem Außenumfang des Halters (12) angeordnet ist.

## Revendications

1. Dispositif d'étanchéité (10) qui rend étanche entre un boîtier (11) et un arbre de rotation (20) traversant le boîtier (11), le dispositif d'étanchéité (10) comprenant :
une bague flottante (15) disposée avec un espace intérieur (h) par rapport à l'arbre de rotation (20), et avec un espace extérieur (g) par rapport au boîtier (11), et
un moyen d'alignement (18) qui aligne sans contact une position de la bague flottante (15), **caractérisé en ce que**
le moyen d'alignement (18) comprend un premier aimant (14) disposé dans le boîtier (11), le premier aimant (14) ayant une face polaire magnétique (14N, 14S) orientée dans la direction radiale, et un second aimant (17) disposé dans la bague flottante (15), le second aimant (17) ayant une face polaire magnétique (17N, 17S) orientée dans la direction radiale,
dans lequel
les faces polaires magnétiques (14N, 14S, 17N, 17S) du premier aimant (14) et du second aimant (17) sont disposées de manière à ce que les mêmes pôles s'opposent l'un à l'autre, et
l'espace intérieur (h) et l'espace extérieur (g) sont formés dans une plage de 0,5 ≤ g/h ≤ 2.

2. Dispositif d'étanchéité (10) selon la revendication 1, dans lequel
la bague flottante (15) est principalement formée d'une bague d'étanchéité (13), d'un dispositif de retenue (12) en matériau non magnétique et du second aimant (17), le dispositif de retenue (12) est adapté à une périphérie extérieure de la bague d'étanchéité (13), et le second aimant (17) est disposé dans une périphérie extérieure du dispositif de retenue (12).
